# EUROPEAN PATENT SPECIFICATION

(11) **EP 2 524 875 B1**
(45) Date of publication and mention of the grant of the patent: **30.07.2014**
(21) Application number: 11382283.7
(22) Date of filing: 31.08.2011
(51) Int. Cl.: B65B 69/00, B65G 1/07

(54) **System and process for separating a tray and at least one product placed thereon**
System und Verfahren zum Trennen einer Schale und mindestens eines darauf gesetzten Produktes
Système et procédé pour séparer un plateau et au moins un produit déposé dessus

(30) Priority: 19.05.2011 ES 201130815
(43) Date of publication of application: 21.11.2012
(73) Proprietor: Ulma Manutencion, S. Coop., 20560 Oñati (Guipúzcoa) (ES)
(72) Inventor: Bautista Altuna, Unai, 20560 OÑATI (Guipúzcoa) (ES); Ballarín Zufiaurre, Iker, 20560 OÑATI (Guipúzcoa) (ES)
(74) Representative: Igartua, Ismael

(56) References cited:
- WO-A1-2010/089150
- FR-A- 1 341 242
- US-A- 4 636 129

## Description

### Technical Field of the Invention

The present invention relates to a separating system for separating a tray and at least one product placed thereon and to the process associated with the same; wherein both are applied in the logistics sector, specifically in the product storage and transportation through different lines of transport.

The aim of this separating system for separating a tray and a product placed thereon is to separate respective elements in a fast, effective manner and without the need of direct human intervention, such that the separating process is completely automated and without the additional need of providing multiple complex or costly elements which negatively affect the final product price; and wherein it additionally allows transporting products with or without tray, providing high versatility to the system and process objects of the invention.

### Background of the Invention

By way of introduction, currently the evolution of logistics systems is increasingly focused towards an increase in automation with the aim of reducing times and costs and increasing the profitability of the systems. For this reason, the use of completely automated product conveyor elements is known, and wherein one of the decisive processes in the control of the performance of all the system lies in the separating process for separating the product to be stored and the support or tray transporting it, since this operation is usually performed manually by a series of workers responsible for picking the product and carrying it towards a storage area.

To solve part of this problem, there are different solutions such as:
- United States application US- 5,733,098 describes an automated system for storing products comprising a series of mechanical gripping arms responsible for removing the products from their corresponding trays; wherein the use of mechanical arms increases the cost of product storage and transportation, in addition to requiring a high level of maintenance to assure the correct operation thereof at all times.
- European patent application number 06113966 describes an automated system for storing articles in which the articles comprise a lower tray having a plurality of through holes, such that when wishing to separate the tray from the article, and a plurality of needles pushing said article towards an upper level is introduced through the holes and the lower part of the tray and therefore separate respective elements; but this system has the drawback of requiring a high number of rods to enable lifting the article since the latter can comprise different shapes and sizes making the lifting thereof difficult, furthermore, once the article is lifted, an extraction or an additional transportation system which can be substantially complex is required for avoiding direct contact with the mentioned rods.
- And in a similar manner to the above European patent, the Japanese applications JP-614114 and JP-1111652 show trays with said plurality of through holes and product extractor rods supported by them, wherein in the latter piston rams for extracting the product from the rods are seen.

Therefore, in view of the above mentioned drawbacks, the appearance of a new separating system for separating a tray and at least one product placed thereon solving the problem disclosed above in line of not requiring costly nor complex separating elements executing said separation in a fast and completely automated manner, in addition to being able to be implemented in any type of factory without the need of incurring a high implementation and start up cost, is necessary.

### Description of the Invention

The present invention relates to a separating system for separating a tray and at least one product placed thereon and to the process associated with the same; wherein the tray carrying said product comprises at least one longitudinal cavity in the contact surface with said at least one product; a longitudinal cavity being understood as a cavity running in the direction of the movement of the set formed by said tray and the product and wherein the system comprises:
- an input conveyor element of a set formed by the tray and by said at least one product placed thereon;
- a first output conveyor element of said at least one product;
- a second output conveyor element of said tray;
- at least one bar placed between the input conveyor element and between the first output conveyor element; and
- a movable conveyor element configured to adopt two positions:
   a) a first position in which the movable conveyor element is placed between the input conveyor element and the second output conveyor element; wherein said at least one bar is introduced in the longitudinal cavity of the tray and allows transporting the tray towards the second output conveyor element, whereas said at least one product is held on said at least one bar; and
   b) a second position in which the movable conveyor element is placed between the input conveyor element and the first output conveyor element, and in contact with said at least one product; wherein the movable conveyor element allows transporting said at least one product towards the first output conveyor element upon contacting with said at least one product placed on said at least one bar. Preferably, the possibility that the movable conveyor element comprises a belt conveyor suitable to be inserted and introduced between said at least one bar supporting said at least one product is contemplated.

And in relation to said system, the separating process for separating the tray and said at least one product placed thereon comprising the following steps is described:
a) transporting the set formed by the tray and said at least one product placed thereon through the input conveyor element until placing at least part of said tray on the movable conveyor element;
b) transporting the tray through the movable conveyor element towards the second output conveyor element; and wherein said at least one product is additionally placed on said at least one bar;
c) moving the movable conveyor element until contacting with said at least one product placed on said at least one bar; and
d) transporting said at least one product through the movable conveyor element towards the first output conveyor element.

Many differences with respect to the currently known state of the art are observed:
1. The tray has at least one longitudinal cavity, and this technical feature allows introducing, in steps a) and b), said at least one bar in the respective longitudinal cavity of the tray, and since said longitudinal cavity is located in the contact surface with said at least one product, it allows creating a separation between the product and the tray, such that the product is transported towards the first output conveyor element and the tray is transported towards the second output conveyor element.
2. Then, the input conveyor element of the tray-product set is provided with a movable conveyor element adopting two positions depending on the exit to be taken: first or second output conveyor element; such that the tray-product set initially contacts with said at least one bar and the separation thereof is produced; the movable conveyor element transports the tray towards the second output conveyor element whereas the product is supported (and preferably without movement) by said at least one bar and once the tray is in the second output conveyor element, it is then that the movable conveyor element moves and contacts with said at least one product for transporting it towards the first output conveyor element.

The advantages derived directly from the system and from the process described are reflected by:
- Simplicity of the elements forming the system since only the movable conveyor element, said at least one bar and the configuration of said tray cavity are the additional elements which provide novelty to the invention with respect to the state of the art described above.
- Speed in separating the tray and the product since at the time in which the product contacts with said at least one bar the tray is separated and follows a path different from the product, obtaining two separate exits: product and tray exits.
- Little maintenance of the system since different conveyor elements such as belt or carpet conveyors can be contemplated.
- Simple tray design and can be formed perfectly in plastic materials since the tray only presents the peculiarity of comprising at least one longitudinal cavity suitable to enable introducing said product supporting bar there through; wherein the tray preferably comprises a plurality of cavities allowing the versatility of the product to be subsequently supported by the respective bars or rods.
- Possibility of transporting the product without the corresponding tray since neither said at least one bar nor the movable conveyor element affect its correct transportation towards the first output conveyor element.

The movable conveyor element comprises a rotation shaft placed at one of its ends and configured for pivoting the movable conveyor element between the first and second position. Thus the movable conveyor element in step c) is moved through said rotation shaft; without the need of providing systems for lifting and lowering the movable conveyor element which could increase the total cost of the system object of the invention; and this solution being simple and with the advantage of performing a smooth transition between the separation of the tray and said at least one product.

Additionally, in step c), the movable conveyor element pivots upwards due to the fact that the first output conveyor element is in an upper plane with respect to the second output conveyor element; this solution improves the separation of the tray with respect to the product since the tray falls by gravity towards the second output conveyor element; and wherein it additionally allows placing the two output conveyor elements in one and the same vertical plane. Thus, according to the described invention, the separating system for separating the tray and said at least one product as well as the process associated with the same form an important novelty in relation to the rest of the known trays-product separating systems to date, such that it allows separating respective elements in a fast, effective manner and without the need of direct human intervention, wherein the separating process is completely automated and does not need to be provided with multiple complex or costly elements which negatively affect the final product price; and wherein it additionally allows transporting products without tray providing high versatility to the system and process objects of invention.

### Description of the Drawings

To complement the description which is being made and for the purpose of aiding to better understand the features of the invention according to a preferred practical embodiment thereof, a set of drawings is attached as an integral part of said description in which the following has been depicted with an illustrative and non-limiting character:
Figures 1A and 1B show a schematic view of a first step wherein a product is placed on a tray and transported from an input conveyor element towards a movable conveyor element.
Figures 2A and 2B show a schematic view of a second step wherein the product is supported on a plurality of bars and the tray is transported through the movable conveyor element towards a second output conveyor element.
Figures 3A and 3B show a schematic view of a third step wherein the product continues to be placed on the plurality of bars and the tray is transported through the second output conveyor element.
Figure 4A and 4B show a schematic view of a fourth step wherein the movable conveyor element pivots towards the upper part and contacts with the product, transporting it towards a first output conveyor element.
Figure 5 shows a schematic perspective view of the tray with the corresponding product thereon, as well as the plurality of bars which are introduced in the tray cavities creating a separation between the product and said tray.

### Preferred Embodiment of the Invention

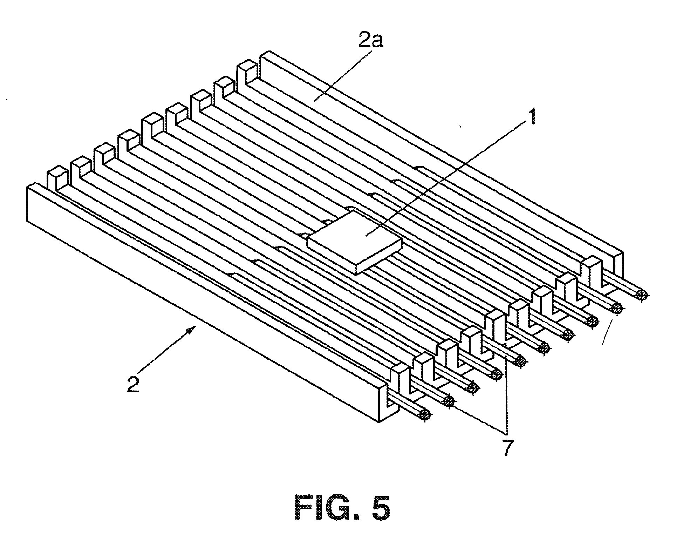

In view of the drawings, it can be observed how in one of the possible embodiments of the separating system for separating a tray (2) and a product (1) placed thereon, wherein in view of Figure 5 it is observed that said tray (2) comprises a plurality of longitudinal cavities (2a) placed on the contact surface with said product (1); said system comprises the following technical features:
An input conveyor element (3) of the set formed by the tray (2) and of the product (1) placed thereon;
a first output conveyor element (5) of said product (1);
a second output conveyor element (6) of said tray (2);
a plurality of bars (7) placed between the input conveyor element (3) and between
the first output conveyor element (5); and
un movable conveyor element (8) of belts configured to adopt two positions:
   a) A first position in which the movable conveyor element (8) is placed between the input conveyor element (3) and the second output conveyor element (6); wherein the plurality of bars (7) are introduced in the respective longitudinal cavities (2a) of the tray and allow creating a separation between the tray (2) and the product (1), such that the tray (2) is transported towards the second output conveyor element (6) through the movable conveyor element (8), whereas the product (1) is held on the plurality of bars (7); and
   b) a second position in which the movable conveyor element (8) is placed between the input conveyor element (3) and the first output conveyor element (5); wherein the movable conveyor element (8) allows transporting said product (1) towards the first output conveyor element (5) since the movable conveyor element (8) comes into physical contact with the product (1) upon being able to be introduced through the plurality of bars (7) due to the fact that the movable conveyor element (8) comprises a plurality of belts which are inserted and introduced between the bars (7) supporting the product (1).

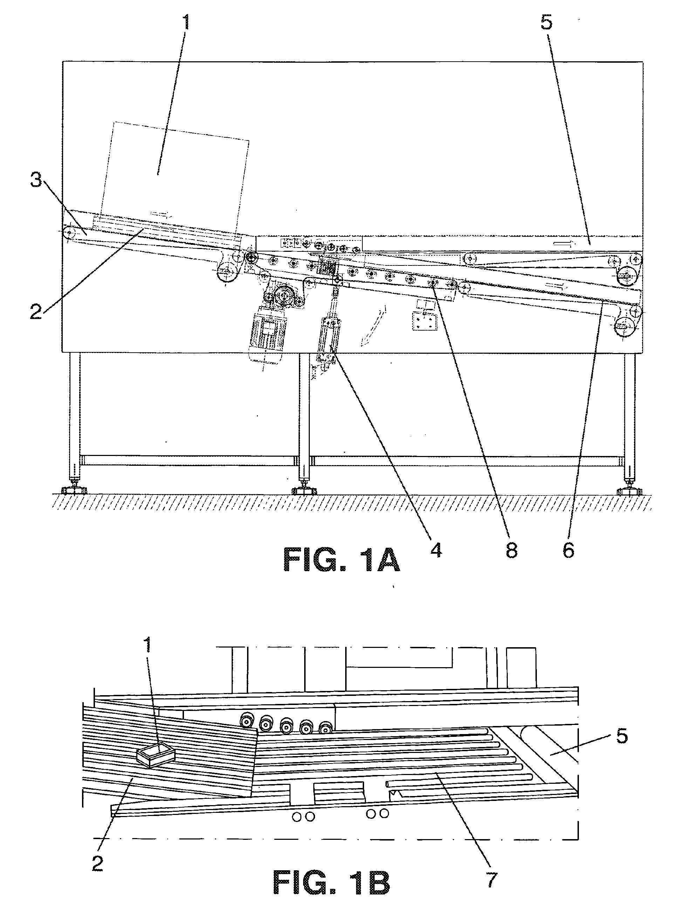

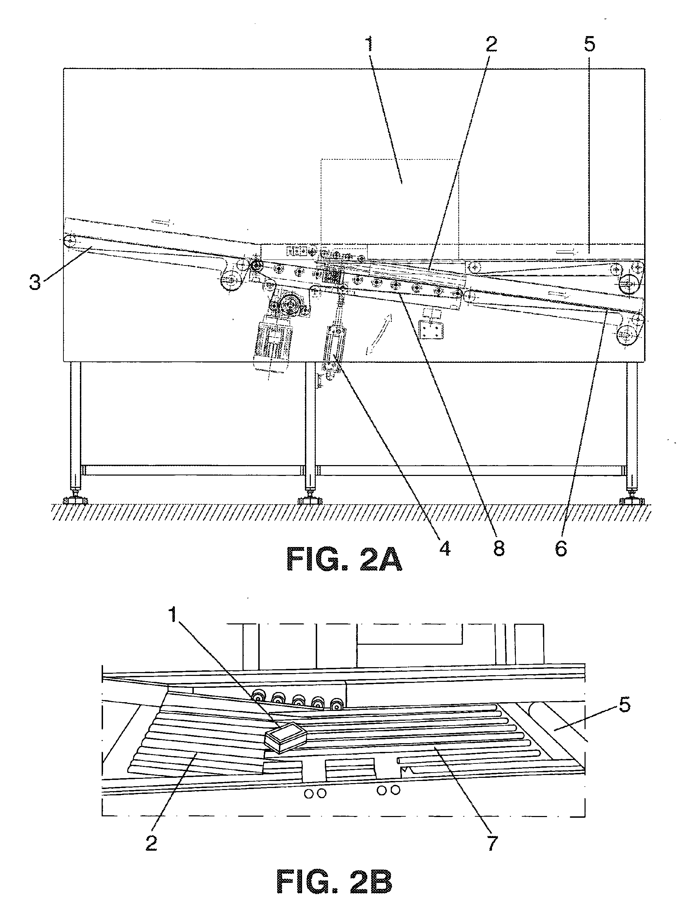

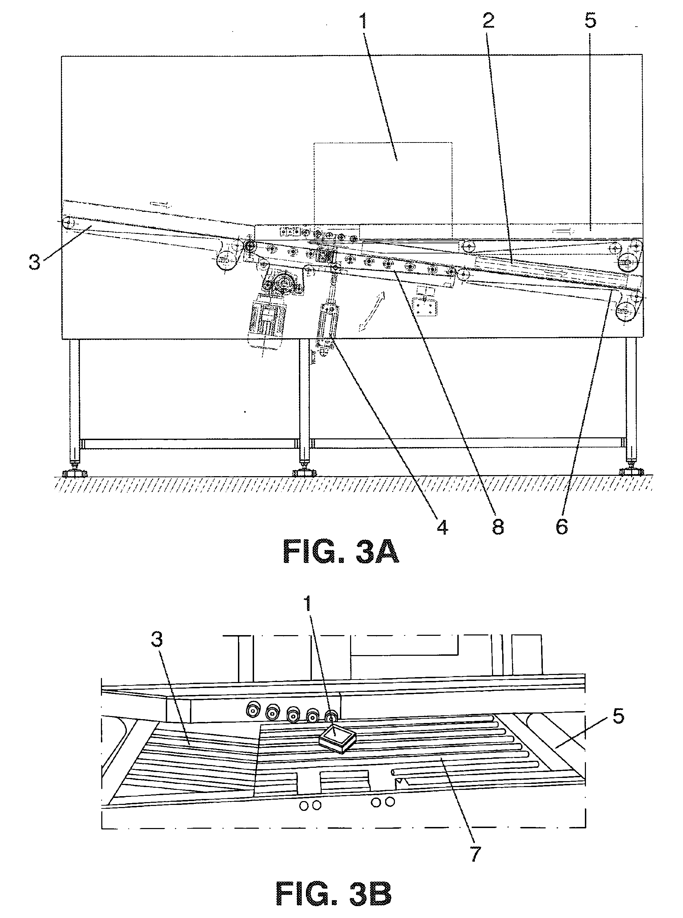

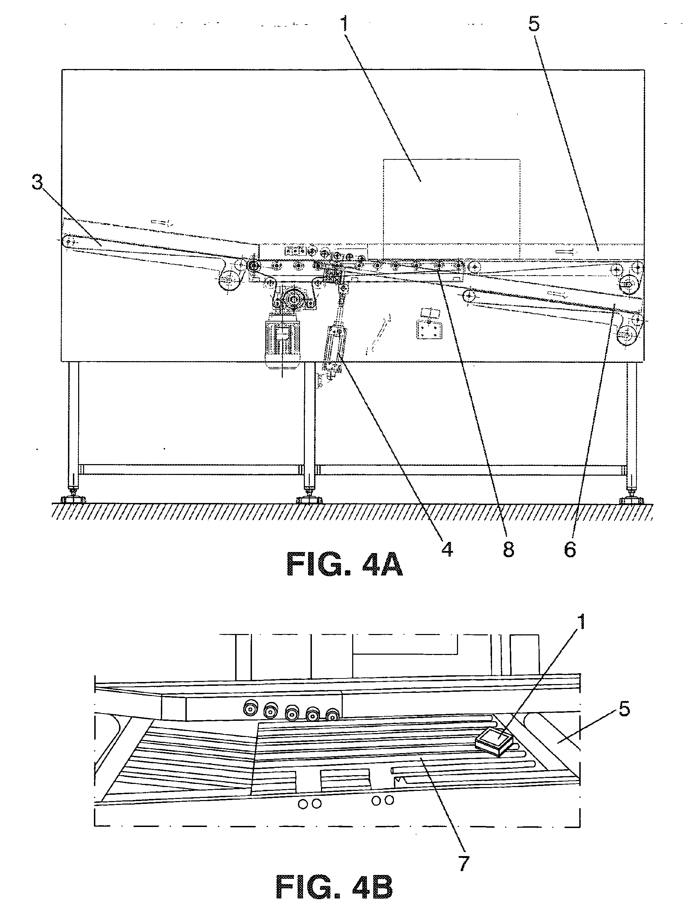

Therefore, according to the sequence shown in Figures 1A to 4B, the separating process for separating the tray (2) and the product (1) placed thereon is described, the steps being:
a) Transporting the set formed by the tray (2) and said product (1) placed thereon through the input conveyor element (3) until placing at least part of said tray (2) on the movable conveyor element (8);
b) transporting the tray (2) through the movable conveyor element (8) towards the second output conveyor element (6); and wherein said product (1) is additionally placed on the plurality of bars (7);
c) moving the movable conveyor element (8) until contacting with the product (1) placed on said plurality of bars (7); wherein the movable conveyor element (8) is moved through a rotation shaft placed at one of its ends and configured for pivoting said movable conveyor element (8) between the first and second position; and wherein the movable conveyor element (8) pivots upwards due to the fact that the first output conveyor element (5) is in an upper plane with respect to the second output conveyor element (6) and as a result of a pneumatic cylinder (4); and
d) transporting the product (1) through the movable conveyor element (8) towards the first output conveyor element (5) as a result of the physical contact of the belts which are inserted between the plurality of bars (7), of the movable conveyor element (8) with the base of the product (1).

Lastly and preferably, the input conveyor element (3), the first output conveyor element (5) and the second output conveyor element (6) comprise a band conveyor, respectively.

In view of this description and set of drawings, the person skilled in the art will understand that the embodiments of the invention which have been described can be combined in multiple ways within the object of the invention. The invention has been described according to some preferred embodiments thereof but it will be evident for the person skilled in the art that which multiple variations can be introduced in said preferred embodiments without exceeding the object of the claimed invention.

## Claims

1. Separating system for separating a tray (2) and at least one product (1) placed thereon, **characterised in that** said tray (2) comprises at least one longitudinal cavity (2a) in the contact surface with said at least one product (1); and wherein the system comprises
an input conveyor element (3) of a set formed by the tray (2) and by said at least one product (1) placed thereon;
a first output conveyor element (5) of said at least one product (1);
a second output conveyor element (6) of said tray (2);
the first output conveyor element (5) being in an upper plane with respect to the second output conveyor element;
at least one bar (7) placed between the input conveyor element (3) and between the first output conveyor element (5); and
a movable conveyor element (8) configured to adopt two positions:
a) a first position in which the movable conveyor element (8) is placed between the input conveyor element (3) and the second output conveyor element (6); wherein said at least one bar (7) is introduced in the longitudinal cavity (2a) of the tray and allows transporting the tray (2) towards the second output conveyor element (6), whereas said at least one product (1) is held on said at least one bar (7); and
b) a second position in which the movable conveyor element (8) is placed between the input conveyor element (3) and the first output conveyor element (5), and in contact with said at least one product (1); wherein the movable conveyor element (8) transports said at least one product (1) towards the first output conveyor element (5) upon contacting with said at least one product (1) placed on said at least one bar (7), the movable conveyor element (8) comprising a rotation shaft placed at one of its ends and configured for pivoting said movable conveyor element (8) between the first and second position.

2. Separating system for separating a tray (2) and at least one product (1) placed thereon according to claim 1, **characterised in that** the movable conveyor element (8) comprises a belt conveyor suitable to be inserted and introduced between said at least one bar (7) supporting said at least one product (1).

3. Separating system for separating a tray (2) and at least one product (1) placed thereon according to any of the preceding claims, **characterised in that** the input conveyor element (3), the first output conveyor element (5), and the second output conveyor element (6) comprise a band conveyor, respectively.

4. Separating process for separating a tray (2) and at least one product (1) placed thereon according to the system defined in any of the preceding claims, **characterised in that** it comprises the following steps:
a) transporting the set formed by the tray (2) and said at least one product (1) placed thereon through the input conveyor element (3) until placing at least part of said tray (2) on the movable conveyor element (8);
b) transporting the tray (2) through the movable conveyor element (8) towards the second output conveyor element (6); and wherein said at least one product (1) is additionally placed on said at least one bar (7);
c) pivoting upwards the movable conveyor element (8) through a rotation shaft placed at one of its ends and configured for pivoting said movable conveyor element (8) between the first and second position, until contacting with said at least one product (1) placed on said at least one bar (7); and
d) transporting said at least one product (1) through the movable conveyor element (8) towards the first output conveyor element (5).

## Patentansprüche

1. Trennungssystem zur Trennung von einem Tablett (2) und mindestens einem Produkt (1), das darauf angebracht ist, **dadurch gekennzeichnet, dass** das Tablett (2) mindestens einen länglichen Hohlraum (2a) in der Kontaktfläche mit dem mindestens einen Produkt (1) aufweist, und wobei das System Folgendes umfasst:
ein Eingebeförderelement (3) eines Satzes, das vom Tablett (2) und dem mindestens einen Produkt (1), das darauf angebracht ist, gebildet wird,
ein erstes Ausgabeförderelement (5) des mindestens einen Produkts (1);
ein zweites Ausgabeförderelement (6) des Tabletts (2);
wobei sich das erste Ausgabeförderelement (5) in einer oberen Ebene mit Bezug auf das zweite Ausgabeförderelement befindet;
mindestens eine Stange (7), die zwischen dem Eingabeförderelement (3) und zwischen dem ersten Ausgabeförderelement (5) angeordnet ist; und
ein bewegliches Förderelement (8), das konfiguriert ist, um zwei Positionen einzunehmen:
a) eine erste Position, in der das bewegliche Förderelement (8) zwischen dem Eingabeförderelement (3) und dem zweiten Ausgabeförderelement (6) angeordnet ist; wobei die mindestens eine Stange (7) in den länglichen Hohlraum (2a) des Tabletts eingeführt ist und ermöglicht, das Tablett (2) hin zum zweiten Ausgabeförderelement (6) zu transportieren, wobei das mindestens eine Produkt (1) auf der mindestens einen Stange (7) gehalten wird; und
b) eine zweite Position, in der das bewegliche Förderelement (8) zwischen dem Eingabeförderelement (3) und dem ersten Ausgabeförderelement (5) in Kontakt mit dem mindestens einen Produkt (1) angeordnet ist; wobei das bewegliche Förderelement (8) das mindestens eine Produkt (1) hin zum ersten Ausgabeförderelement (5) transportiert, wenn es mit dem mindestens einen Produkt (1), das auf der mindestens einen Stange (7) angeordnet ist, in Kontakt kommt, wobei das bewegliche Förderelement (8) eine Drehwelle umfasst, die auf einem seiner Enden angebracht und konfiguriert ist, um das bewegliche Förderelement (8) zwischen der ersten und der zweiten Position zu drehen.

2. Trennungssystem zur Trennung von einem Tablett (2) und mindestens einem Produkt (1), das darauf angebracht ist, nach Anspruch 1, **dadurch gekennzeichnet, dass** das bewegliche Förderelement (8) ein Transportband umfasst, das geeignet ist, um zwischen die mindestens eine Stange (7), die das mindestens eine Produkt (1) trägt, eingesteckt und eingeführt zu werden.

3. Trennungssystem zur Trennung von einem Tablett (2) und mindestens einem Produkt (1), das darauf angebracht ist, nach einem der vorhergehenden Ansprüche, **dadurch gekennzeichnet, dass** das Eingabeförderelement (3), das erste Ausgabeförderelement (5) und das zweite Ausgabeförderelement (6) jeweils ein Förderband umfassen.

4. Trennungsverfahren zur Trennung von einem Tablett (2) und mindestens einem Produkt (1), das darauf angebracht ist, nach dem System, das in einem der vorhergehenden Ansprüche definiert ist, **dadurch gekennzeichnet, dass** es die Folgenden Schritte umfasst:
a) Transportieren des Satzes, der vom Tablett (2) und dem mindestens einen Produkt (1), das darauf angebracht ist, gebildet wird, durch das Eingabeförderelement (3), bis mindestens ein Teil des Tabletts (2) auf dem beweglichen Förderelement (8) angebracht ist,
b) Transportieren des Tabletts (2) durch das bewegliche Förderelement (8) hin zum zweiten Ausgabeförderelement (6), und wobei das mindestens eine Produkt (1) zusätzlich auf der mindestens einen Stange (7) angeordnet ist;
(c) Drehen des beweglichen Förderelements (8) durch eine Drehwelle, die auf einem seiner Enden angebracht und konfiguriert ist, um das bewegliche Förderelement (8) zwischen der ersten und der zweiten Position zu drehen, bis es mit dem mindestens einen Produkt (1), das auf der mindestens einen Stange (7) angeordnet ist, in Kontakt kommt,
(d) Transportieren des mindestens einen Produkts (1) durch das bewegliche Förderelement (8) hin zum ersten Ausgabeförderelement (5).

## Revendications

1. Système de séparation pour séparer un plateau (2) et au moins un produit (1) placé sur ce dernier, **caractérisé en ce que** ledit plateau (2) comprend au moins une cavité longitudinale (2a) dans la surface de contact avec ledit au moins un produit (1) ; et dans lequel le système comprend :
un élément de transporteur d'entrée (3) d'un ensemble formé par le plateau (2) et par ledit au moins un produit (1) placé sur ce dernier ;
un premier élément de transporteur de sortie (5) dudit au moins un produit (1) ;
un second élément de transporteur de sortie (6) dudit plateau (2) ;
le premier élément de transporteur de sortie (5) étant dans un plan supérieur par rapport au second élément de transporteur de sortie ;
au moins une barre (7) placée entre l'élément de transporteur d'entrée (3) et entre le premier élément de transporteur de sortie (5) ; et
un élément de transporteur mobile (8) configuré pour adopter deux positions ;
a) une première position dans laquelle l'élément de transporteur mobile (8) est placé entre l'élément de transporteur d'entrée (3) et le second élément de transporteur de sortie (6) ; dans lequel ladite au moins une barre (7) est introduite dans la cavité longitudinale (2a) du plateau et permet de transporter le plateau (2) vers le second élément de transporteur de sortie (6), alors que ledit au moins un produit (1) est maintenu sur ladite au moins une barre (7) ; et
b) une seconde position dans laquelle l'élément de transporteur mobile (8) est placé entre l'élément de transporteur d'entrée (3) et le premier élément de transporteur de sortie (5), et en contact avec ledit au moins un produit (1) ; dans lequel l'élément de transporteur mobile (8) transporte ledit au moins un produit (1) vers le premier élément de transporteur de sortie (5) suite au contact avec ledit au moins un produit (1) placé sur ladite au moins une barre (7), l'élément de transporteur mobile (8) comprenant un arbre de rotation placé au niveau de l'une de ses extrémités et configuré pour faire pivoter ledit élément de transporteur mobile (8) entre les première et seconde positions.

2. Système de séparation pour séparer un plateau (2) et au moins un produit (1) placé sur ce dernier selon la revendication 1, **caractérisé en ce que** l'élément de transporteur mobile (8) comprend une courroie transporteuse appropriée pour être insérée et introduite entre ladite au moins une barre (7) supportant ledit au moins un produit (1).

3. Système de séparation pour séparer un plateau (2) et au moins un produit (1) placé sur ce dernier selon l'une quelconque des revendications précédentes, **caractérisé en ce que** l'élément de transporteur d'entrée (3), le premier élément de transporteur de sortie (5) et le second élément de transporteur de sortie (6) comprennent une bande transporteuse, respectivement.

4. Procédé de séparation pour séparer un plateau (2) et au moins un produit (1) placé sur ce dernier selon le système selon l'une quelconque des revendications précédentes, **caractérisé en ce qu'**il comprend les étapes suivantes consistant à :
a) transporter l'ensemble formé par le plateau (2) et ledit au moins un produit (1) placé sur ce dernier par le biais de l'élément de transporteur d'entrée (3) jusqu'à la mise en place d'au moins une partie dudit plateau (2) sur l'élément de transporteur mobile (8);
b) transporter le plateau (2) par le biais de l'élément de transporteur mobile (8) vers le second élément de transporteur de sortie (6) ; et dans lequel ledit au moins un produit (1) est placé de plus sur ladite au moins une barre (7) ;
c) faire pivoter vers le haut l'élément de transporteur mobile (8) par le biais d'un arbre de rotation placé au niveau de l'une de ses extrémités et configuré pour faire pivoter ledit élément de transporteur mobile (8) entre les première et seconde positions, jusqu'au contact avec ledit au moins un produit (1) placé sur ladite au moins une barre (7) ; et
d) transporter ledit au moins un produit (1) par le biais de l'élément de transporteur mobile (8) vers le premier élément de transporteur de sortie (5).
